# EUROPÄISCHE PATENTSCHRIFT

(11) **EP 2 234 470 B1**
(45) Veröffentlichungstag und Bekanntmachung des Hinweises auf die Patenterteilung: **26.07.2017**
(21) Anmeldenummer: 09703280.9
(22) Anmeldetag: 17.01.2009
(51) Int. Cl.: A01C 23/00, A01C 23/04

(54) **VORRICHTUNGEN ZUR AUSBRINGUNG VON GÜLLE**
DEVICES FOR SPREADING LIQUID MANURE
DISPOSITIFS D'ÉPANDAGE DE PURIN

(30) Priorität: 23.01.2008 DE 202008000955 U
(43) Veröffentlichungstag der Anmeldung: 06.10.2010
(73) Patentinhaber: Zunhammer, Sebastian, 83301 Traunreut (DE)
(72) Erfinder: Zunhammer, Sebastian, 83301 Traunreut (DE)
(74) Vertreter: Heilein, Ernst - Peter
(86) Internationale Anmeldenummer: PCT/EP2009/000285
(87) Internationale Veröffentlichungsnummer: WO 2009/092549

(56) Entgegenhaltungen:
- EP-A- 1 752 033
- DE-A1- 10 318 942
- DE-U1-202006 015 589
- DE-U1-202007 000 724

## Beschreibung

Die vorliegende Erfindung bezieht sich auf Vorrichtungen zum Optimieren der Ausbringmenge von Inhaltsstoffen, enthalten in Gülle, welche aus einem Vorratsbehälter entnommen wird, auf zu düngenden Boden, mit Hilfe eines Gülle-Tankfahrzeugs, gemäß den Oberbegriffen der Ansprüche 1 und 2.

Güllefahrzeuge sind hinlänglich bekannt. So ist aus der DE 195 20 950 C1 ein Güllefahrzeug bekannt, bei dem Gülle über eine Schleppschlauch-Verteilervorrichtung bodennah ausgebracht wird. Dort wird auch bereits ein Hinweis darauf gegeben, dass die Agrartechnik im Allgemeinen auch die Aufgabe hat, die Gülleausbringung umweltgerecht zu ermöglichen. Dazu sind vielfältige Lösungsvorschläge gemacht worden, auf die hier nicht näher eingegangen werden muss, da sie Lösungen in die unterschiedlichsten Richtungen vorschlagen.

In der so genannten "Düngeverordnung" sind beispielsweise Vorschriften darüber enthalten, in welcher Inhaltsstoffkonzentration die jeweilige Gülle auf die Felder ausgebracht werden darf. Beispielsweise wird dort festgelegt, wie viel Kilogramm (kg) Stickstoff (N) pro Hektar (ha) und Jahr auf den Boden ausgebracht werden darf. Stickstoff wird im Folgenden nur als Beispiel angeführt, wobei auch noch von Bedeutung ist, dass selbst Stickstoff in Gülle selten in reiner Form, vielmehr meistens in verschiedenen chemischen Verbindungen, so zum Beispiel als Ammonium-Stickstoff-Verbindung vorkommt. Aber auch die Grenzwerte anderer Inhaltsstoffe sind dort angegeben. Um diese Verordnung auch nur annähernd erfüllen zu können, müssen die einzelnen in Frage kommenden Inhaltsstoffe der Gülle dem Anwender bekannt sein. Kennt der Anwender die Anteile der verschiedenen Inhaltsstoffe, so kann er durch die Steuerung der Ausbringmenge pro Flächeneinheit die Nähr- oder Inhaltsstoffkonzentration näherungsweise beeinflussen.

Um aber die Inhaltsstoffe ermitteln zu können, ist es besser, die in Frage kommende Gülle zu analysieren, als die Inhaltsstoffe anhand von Faustzahlen zu schätzen. Voraussetzung für aussagefähige Ergebnisse ist, dass eine repräsentative Mischprobe untersucht wird. Dazu muss der Inhalt des Güllevorratsbehälters homogenisiert also beispielsweise gemischt werden. Da Gülle ein Mehrnährstoffdünger ist, bedeutet das, dass sich die Aufwandmenge an dem Nährstoff orientiert, dessen Bedarf zuerst abgedeckt ist.

Diese Erkenntnisse lassen eine Optimierung der Gülleausbringung zumindest theoretisch zu. In der Praxis sind jedoch erhebliche Probleme aufgrund verschiedener Störfaktoren zu berücksichtigen, die teilweise mit der herkömmlichen Technik nicht gelöst werden können. So muss der Anwender mit sehr unterschiedlichen, Tierart bedingten Gülleformen arbeiten (Schweinegülle, Rindergülle, Hühnergülle) um nur die groben Unterschiede aufzuzählen. Lohnunternehmer, die von verschiedenen landwirtschaftlichen Betrieben Gülle aufnehmen und ausfahren, können in der Praxis nicht mit einer einigermaßen korrekten Gülleanalyse aufwarten. Ferner gibt es Gemeinschaftsfässer, bei deren Füllung auch keine analytisch homogene Gülle angenommen werden kann. Die Inhaltsstoffe von Gülle aus Biogas-Anlagen sind in der Regel ebenso undefiniert. In einem Güllevorratsbehälter gibt es Sinkschichten unterschiedlicher Dichte und so genannte Schwimmdecken. Ferner muss damit gerechnet werden, dass bei einem vollen Güllevorratsbehälter (Güllesilo) der Trockenmasseanteil beim Beginn der Leerung anders ist, als zum Ende der Leerung. Daraus folgert, dass in der Praxis die tatsächlich auf dem Boden ausgebrachte Inhaltsstoffmenge nur grob geschätzt bis unbekannt ist, obwohl die Verteilung mit einer Abweichung von 5-10% per cbm erfolgt.

In der DE 101 42 865 A1 ist zu dieser Problematik ein Verfahren beschrieben, bei dem Funktionseinheiten (z.B. Sensoren) zur Feststellung der Bodenwerte großflächig im Boden der Nutzfläche verteilt sind (dort Spalte 4, Zeilen 40 bis 42), ebenso großflächig auf dem Boden der Nutzfläche sind Vorrichtungen zur Tröpfchenberegnung oder Schlauchbewässerung verteilt (dort Spalte 6, Zeilen 42 bis 46). Bei derartigen stationären Systemen ist ein hoher Investitionsaufwand erforderlich, um eine größere Nutzfläche mit einer Vielzahl von Sensoren zu versehen und eine entsprechend große Anzahl von Verteilerleitungen mit Ausbringelementen (Verschlauchung und Düsen) zur großflächigen Verteilung zu installieren. Wenn Verkehrswege die Nutzfläche durchkreuzen ist eine Verschlauchung praktisch nicht realisierbar. Die in dieser Druckschrift erwähnten Datenübertragungsbausteine sind ebenfalls sehr kostenintensiv in der Anschaffung und im Betrieb, ferner müssen aufwändige Redundanz-Maßnahmen vorgesehen sein, um die Übertragung der Mess- und Steuerdaten störunanfällig zu machen. Schließlich ist das Ergebnis der Gülleanalyse sehr abhängig von der Art der Probenentnahme, denn es ist nicht unerheblich, ob beispielsweise Schweinegülle, oder Rindergülle oder eine Mischgülle verarbeitet werden soll. Die Lagerung der Gülle im Vorratsbehälter ist ebenso zu berücksichtigen (Schwimmdecke oder Ablagerungen der Feststoffpartikel am Boden des Vorratsbehälters). Die Aufbereitung der Gülle gemäß diesem Stand der Technik muss diese Faktoren alle berücksichtigen und die auszubringende Gülle ist entsprechend anzupassen bzw. aufzubereiten, z. B. durch Zugabe von Wasser, d. h. durch mischen mit Frischwasser (dort Spalte 6, Zeilen 34 ff).

Dort ist auch die Lehre zu entnehmen, dass die so aufbereitete Gülle erneut einer Analyse durch weitere Sensoren unterzogen werden muss (Spalte 5, Zeilen 36 bis 40). Die Ausbringung soll dann favorisiert über bekannte Tröpfchenberegnung oder Schlauchbewässerung erfolgen. Aus der Beschreibung wird ohne Weiteres deutlich, dass der apparative, der logistische und der Aufwand an technisch anspruchsvoller Datenverarbeitung und Datenübertragungstechnik enorm hoch ist, abgesehen von der Notwendigkeit, ein Analyselabor einzurichten und zu betreiben.

In der WO 00/64242 A1 ist ein Sensor zur spektralanalytischen Untersuchung von Flüssigkeiten bekannt. Dort wird beispielsweise Milch mit einem derartigen Sensor untersucht.

Aus der DE 103 18 924 A1 ist ein Verfahren zur Ausbringung von Gülle bekannt, bei dem ein Güllesensor in Echtzeit die Inhaltsstoffe der auszubringenden Gülle ermittelt und mit vorgegeben Inhaltsstoffen vergleicht. Die auszubringende Güllemenge pro Flächeneinheit errechnet sich dabei abhängig vom diesem Vergleichsergebnis. Bei diesem Verfahren findet die Analyse der Gülle während der Ausbringung statt, woraus sich ergibt, dass die Bauelement wie Sensor und Verteileinrichtung sehr großen Belastungen während der Ausbringungs-Fahrt ausgesetzt sind. Die in Frage kommenden Bauelemente müssen in Echtzeit arbeiten, was nur durch kostspielige Komponenten realisiert werden kann. An deren mechanische Belastbarkeit werden wegen der bei der Ausbringung möglicher Weise auftretenden Probleme wie Schwingungen und Rütteleffekte hohe Anforderungen gestellt. Außerdem können bei Verstopfungen am Verteiler Druckprobleme auftreten, beispielsweise durch Pulsation, am Sensor, die die Messungen beeinflussen könnten.

In der DE 20 2006 015 589 U1 sind gattungsgemäße Güllefahrzeuge offenbart mit einem Vorratsbehälter und wenigstens einer Verteilervorrichtung, die mit dem Vorratsbehälter mittels einem Leitungssystem verbunden ist, sowie mit wenigstens einem Sensor zum Messen der Inhaltsstoffe der auszubringenden Gülle, und mit einer Auswertevorrichtung, welche Steuerdaten erzeugt, die durch den Vergleich der vom Sensor gemessenen Inhaltsstoff-Ist-Daten der Gülle mit vorgebbaren Inhaltsstoff-Daten berechnet werden und mittels der Verteilervorrichtung in Abhängigkeit der von der Auswertevorrichtung erzeugten Steuerdaten eine variable Güllemenge pro Flächeneinheit auf den Boden ausbringbar ist. Dabei ist der Sensor im Befüllungsbereich des Vorratsbehälters oder in einem die Gülle umrührenden Leitungssystem zwischen dem Befüllungsbereich und der Verteilervorrichtung oder im Vorratsbehälter angeordnet.

Der vorliegenden Erfindung liegt die Aufgabe zu Grunde, Vorrichtungen zu schaffen, mit denen eine gegenüber dem Stand der Technik effizientere Analyse der Gülle sowie eine Optimierung der Gülledüngung möglich ist.

Diese Aufgabe wird mit Vorrichtungen gelöst, welche den Merkmalen der Ansprüche 1 und 2 entsprechen. Durch Vorrichtungen mit den Merkmalen der abhängigen Ansprüche wird die Erfindung vorteilhaft ausgestaltet.

Besonders vorteilhaft ist dabei eine Vorrichtung zum Optimieren der Ausbringmenge von Inhaltsstoffen, enthalten in Gülle, welche aus einem Vorratsbehälter entnommen wird, auf zu düngenden Boden, mit Hilfe eines Gülle-Tankfahrzeugs, wenn zur Entnahme der Gülle aus dem Vorratsbehälter für das Gülle-Tankfahrzeug ein Entnahme-Leitungssystem vorhanden ist, wobei der Sensor im Entnahme-Leitungssystem angeordnet ist.

Ferner ist eine Vorrichtung vorteilhaft, wenn zum Umfüllen der Gülle aus dem Vorratsbehälter in das Gülle-Tankfahrzeug ein Umfüll-Leitungssystems vorhanden ist und wenn der Sensor im Umfüll-Leitungssystem angeordnet ist.

Des Weiteren ist eine Vorrichtung von Vorteil, wenn zur Entnahme der Gülle eine Pumpe in dem Vorratsbehälter angeordnet ist, wobei es besonders günstig ist, wenn die Pumpe eine mobile Pumpe ist. Eine mobile Pumpe kann besonders vorteilhaft als fahrbare Pumpstation ausgebildet sein.

Vorteilhaft kann eine Vorrichtung so ausgeführt sein, dass zur Entnahme der Gülle aus dem Vorratsbehälter ein mit Vakuum beaufschlagtes Gülle-Tankfahrzeug vorgesehen ist.

Eine Vorrichtung ist dann besonders vorteilhaft, wenn der Sensor über eine Verbindung in Form einer Verbindungsleitung oder drahtlos mit einer Auswertevorrichtung verbunden ist.

Besonders vorteilhaft ist es, wenn die Auswertevorrichtung über eine Verbindung in Form einer Verbindungsleitung oder drahtlos mit der einstellbaren Vorrichtung respektive der Verteilervorrichtung verbunden ist. Es kann dabei von Vorteil sein, wenn die Verbindungsleitung eine elektrische oder optische Datenleitung ist, oder wenn die Verbindung drahtlos ist und als Funktelefon, Datenfunk, Infrarot, so genanntem Bluetooth oder ähnlichem realisierbar ist.

Die Erfindung wird mit Hilfe der Zeichnungen anhand von Ausführungsbeispielen im Folgenden noch näher erläutert.

Es zeigt
- Figur 1: ein als Anhänger ausgebildetes Gülle-Tankfahrzeug beim Entnehmen von Gülle aus einem Vorratsbehälter mittels eines Entnahme-Leitungssystems;
- Figur 2: ein weiteres als Anhänger ausgebildetes Gülle-Tankfahrzeug beim Umfüllen von Gülle aus einem Vorratsbehälter mittels eines Umfüll-Leitungssystems; und
- Figur 3: eine Variante, bei der das Gülle-Tankfahrzeug als Vakuum-Tankwagen ausgebildet ist.

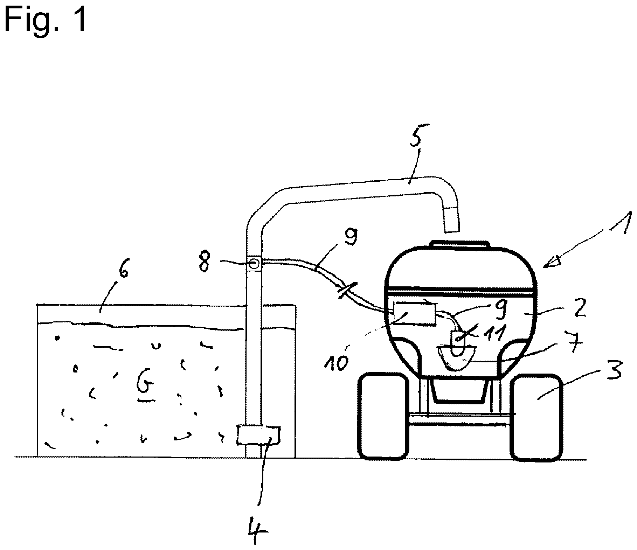

**Figur 1** zeigt stark schematisiert ein Gülle-Tankfahrzeug in der Rückansicht. Mit dem Bezugszeichen 1 ist das gesamte Gülle-Tankfahrzeug bezeichnet, welches einen Tank 2 und ein Fahrgestell 3 aufweist. Eine mit dem Bezugszeichen 4 bezeichnete Pumpe fördert mit Hilfe eines Leitungssystems 5 die auszubringende Gülle G aus einem Vorratsbehälter 6 in den Tank 2. Mittels einer symbolisch dargestellten Verteilervorrichtung 7, beispielsweise einer Schleppschlauchvorrichtung kann die Gülle G anschließend auf einem Acker ausgebracht werde.

Als Verteilervorrichtung 7 können Schleppschläuche vorgesehen sein, die bodennah enden, so dass auch in dieser Hinsicht die Ausbringung der Gülle G optimiert ist. Weitere Gülleverteiler wie Güllegrubber, Schlitzverteiler oder andere Bauformen, mit denen die Gülle in den Boden injiziert werden kann, sind mit Vorteilen einsetzbar.

Ein Sensor 8 befindet sich an geeigneter Stelle im Entnahme-Leitungssystem 5. Die Bauart des Sensors 8 ist an sich beliebig, er muss geeignet sein, die Gülle G zeitnah zur Ausbringung auf ihre Inhaltsstoffe hin zu analysieren. Eine bevorzugte Bauart ist die eines optisch arbeitenden Sensors 8, der die Gülle G einer Spektralanalyse unterzieht. Die vom Sensor 8 gewonnenen Messdaten werden über Verbindungen 9 einer Auswertevorrichtung 10 zugeführt, welche eine einstellbare Vorrichtung in Form eines Ventils 11 auf Grund der Steuerdaten über weitere Verbindungen 9 so ansteuert, dass die von der Verteilervorrichtung 7 auf den Boden ausgebrachte Güllemenge - bezogen auf ihre Inhaltsstoffe - möglichst exakt den vorgegebenen Inhaltsstoffen pro Flächeneinheit entspricht.

Es ist ersichtlich, dass auf diese Weise die vom Sensor 8 zeitnah zur Ausbringung gemessenen Inhaltsstoff-Anteile die Ausbringmenge der Gülle G bestimmen. Dazu werden die Messdaten in der Auswertevorrichtung 10 in Steuersignale für die Pumpe 4 und das Ventil 11 umgewandelt und die Ausbringmenge nach Maßgabe der Bedarfsgrößen gesteuert. Die Bedarfsgrößen können die Vorgaben des Gesetzgebers sein, oder aber Bedarfsdaten, die aus dem Nährstoffbedarf des Bodens allgemein oder dem Nährstoffbedarf von Pflanzen hergeleitet sind.

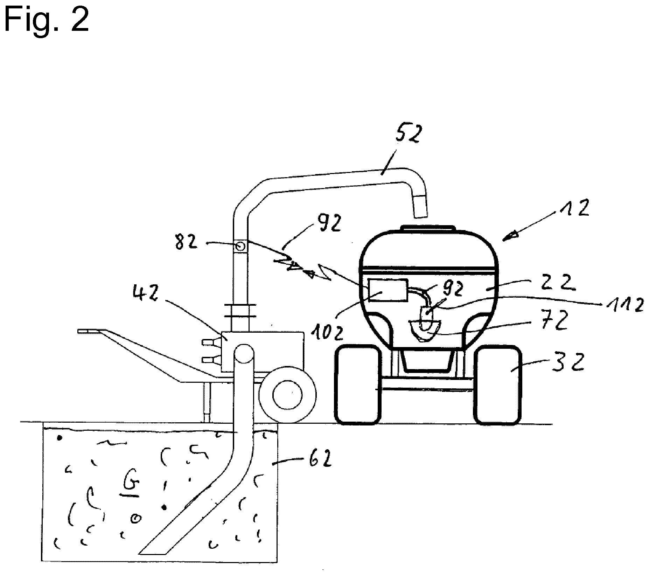

In **Figur 2** ist in ähnlich schematischer Weise wie in Figur 1 ein Gülle-Tankfahrzeug gezeigt, welches einen Gülleanhänger 12 darstellt. In analoger Weise zu dem Gülle-Tankfahrzeug 1 gemäß Figur 1 weist das Gülle-Tankfahrzeug 12 ein Fahrgestell 32 auf. Ein Tank 22 nimmt den Vorrat an auszubringender Gülle G auf. Eine mit dem Bezugszeichen 42 bezeichnete Pumpe fördert mit Hilfe eines Umfüll-Leitungssystems 52 die Gülle G aus einem Vorratsbehälter 62 in den Tank 22. Die Pumpe ist als mobile Pumpstation 42 ausgeführt und kann sowohl im landwirtschaftlichen Betrieb als auch im Feldbetrieb eingesetzt werden, das tragbar oder fahrbar, eben mobil ist. Das Gülle-Tankfahrzeug 12 weist eine Verteilervorrichtung 72 auf, mittels der die Gülle G anschließend ausgebracht wird. Die Verteilervorrichtung 72 kann auch bei diesem Ausführungsbeispiel beliebiger Art sein. Ein Ventil 112 befindet sich an geeigneter Stelle im Gülle-Tankfahrzeug 12 und kann als Schieberventil ausgebildet sein. Im Umfüll-Leitungssystem 52 des Umfüllbereichs ist ein Sensor 82 angeordnet. Die Bauart des Sensors 82 ist auch in diesem Ausführungsbeispiel wieder beliebig, er muss geeignet sein, die Gülle G zeitnah zur Ausbringung auf ihre Inhaltsstoffe hin zu analysieren. Eine bevorzugte Bauart ist die eines optisch arbeitenden Sensors 82, der die Gülle G einer Spektralanalyse unterzieht. Die vom Sensor 82 gewonnenen Messdaten werden über Verbindungen 92 einer Auswertevorrichtung 102 zugeführt, welche über weitere Verbindungen 92 mit Hilfe einer einstellbaren Vorrichtung wie dem Ventil 112 in Anhängigkeit vom Ergebnis der Analyse des Güllesensors 82 so ansteuert, dass die von der Verteilervorrichtung 72 auf den Boden ausgebrachte Güllemenge - bezogen auf ihre Inhaltsstoffe - möglichst exakt den vorgegebenen Inhaltsstoffen pro Flächeneinheit entspricht.

Bei dieser Ausführungsform, bei der der Sensor 82 im Umfüllbereich des Vorratsbehälters 62 angeordnet ist, wird die Gülle während der Umfüllung vom Vorratsbehälters 62 in den Tank 22 analysiert. Dies kann bei der Umfüllung aus dem stationären Vorratsbehälter 62 auf dem landwirtschaftlichen Anwesen - wie es hier dargestellt ist - erfolgen. Wie bereits beschrieben ist dazu eine mobile Pumpstation 42 bestens geeignet. In diesem Fall erfolgt die Analyse während der Umfüllung und zeitnah zur anschließenden Ausbringung und zwar für jede einzelne Tankladung.

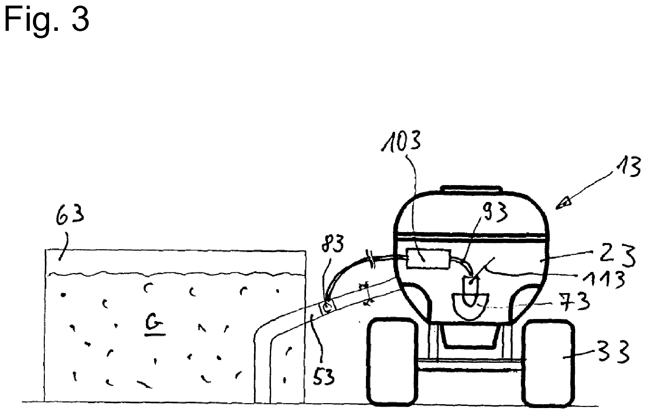

In **Figur 3** ist ebenfalls schematisch eine andere Ausführungsform eines Gülle-Tankfahrzeugs 13 dargestellt. Auch diese Bauform verfügt über ein Fahrgestell 33 und einen Tank 23 sowie über ein Entnahme-Leitungssystem 53 und ein Ventil 63, welches die Verteilervorrichtung 73 beaufschlagt. Zwischen dem Sensor 83 und einer Auswertevorrichtung 103 besteht eine Verbindung 93 zur Datenübertragung, wobei über eine weitere Verbindung 93 eine Datenübertragung zu einer einstellbaren Vorrichtung in Form des Ventils 63 erfolgt, welches in Anhängigkeit vom Ergebnis der Analyse des Güllesensors 83 so angesteuert wird, dass die von der Verteilervorrichtung 73 auf den Boden ausgebrachte Menge an Gülle G - bezogen auf ihre Inhaltsstoffe - möglichst exakt den vorgegebenen Inhaltsstoffen pro Flächeneinheit entspricht.

Abweichend von den vorbeschriebenen Bauformen ist bei diesem Ausführungsbeispiel keine Pumpe vorgesehen. Der Sensor 83 ist in einem Abschnitt des Entnahme-Leitungssystems 53 angeordnet, der sich zwischen dem Tank 23 und einem Vorratsbehälter 63 befindet. Das Gülle-Tankfahrzeug 13 ist als so genanntes Vakuumfaß ausgebildet und die Gülle G wird über ein Entnahme-Leitungssystem 53 aus einem Vorratsbehälter 63 auf Grund des im Tank 23 herrschenden Unterdrucks abgesaugt und in den Vakuum-Tank 23 entnommen. Während dieses Vorgangs wird die Gülle G von dem Sensor 83 analysiert, von der Auswertevorrichtung 103 ein Vergleichswert gebildet und dieser mittels einer einstellbaren Vorrichtung in Form eines Ventils 113 für die Ausbringung verwertet.

### Bezugszeichenliste

- 1: Gülle-Tankfahrzeug; auch: 12; 13
- 2: Tank; auch: 22; 23
- 3: Fahrgestell; auch: 32; 33
- 4: Pumpe; auch: 42
- 5: Leitungssystem; auch: 52; 53
- 6: Vorratsbehälter; auch: 62; 63
- 7: Verteilervorrichtung; auch: 72; 73
- 8: Sensor; auch: 82; 83
- 9: Verbindung; auch: 92; 93
- 10: Auswertevorrichtung; auch: 102; 103
- 11: einstellbare Vorrichtung; auch: 112; 113

## Patentansprüche

1. Vorrichtung zum Optimieren der Ausbringmenge von Inhaltsstoffen, enthalten in Gülle (G), welche aus einem Vorratsbehälter (6; 63) entnommenen wird, auf zu düngenden Boden, mit Hilfe eines Gülle-Tankfahrzeugs (1; 13),
- wobei ein Sensor (8; 83) für die Analyse der auszubringenden Gülle (G) bezüglich ihrer Inhaltsstoffe vorhanden ist,
- wobei eine Auswertevorrichtung (10; 103) für den Vergleich der vom Sensor (8; 83) analytisch gewonnenen Inhaltsstoff-Ist-Daten mit vorgegebenen Inhaltstoff-Daten vorhanden ist,
- wobei eine Verbindung (9; 93) zwischen der Auswertevorrichtung (10; 103) und einer einstellbaren Vorrichtung (11; 113) besteht, mit welcher die auszubringende Menge der Gülle (G) veränderbar ist,
- wobei die einstellbare Vorrichtung (11; 113) über die Verbindung (9; 93) Vergleichsdaten der Inhaltsstoff-Daten von der Auswertevorrichtung (10; 103) erhält,
- und wobei die einstellbare Vorrichtung (11; 113) mit einer Verteilervorrichtung (7; 73) verbunden ist und diese derart reguliert, dass die pro Flächeneinheit auszubringende Menge der Gülle (G) einstellbar ist,
**dadurch gekennzeichnet,**
- **dass** zur Entnahme der Gülle (G) aus dem Vorratsbehälter (6; 63) für das Gülle-Tankfahrzeug (1; 13) ein Entnahme-Leitungssystem (5; 53) vorhanden ist,
- und **dass** der Sensor (8; 83) im Entnahme-Leitungssystem (5; 53) angeordnet ist.

2. Vorrichtung zum Optimieren der Ausbringmenge von Inhaltsstoffen, enthalten in Gülle (G), welche aus einem Vorratsbehälter (62) entnommen wird, auf zu düngenden Boden, mit Hilfe eines Gülle-Tankfahrzeugs (12),
- wobei ein Sensor (82) für die Analyse der auszubringenden Gülle (G) bezüglich ihrer Inhaltsstoffe vorhanden ist,
- wobei eine Auswertevorrichtung (102) für den Vergleich der vom Sensor (82) analytisch gewonnenen Inhaltsstoff-Ist-Daten mit vorgegebenen Inhaltstoff-Daten vorhanden ist,
- wobei eine Verbindung (92) zwischen der Auswertevorrichtung (102) und einer einstellbaren Vorrichtung (112)besteht, mit welcher die auszubringende Menge der Gülle (G) veränderbar ist,
- wobei die einstellbare Vorrichtung (112) über die Verbindung (92;) Vergleichsdaten der Inhaltsstoff-Daten von der Auswertevorrichtung (102) erhält
- und wobei die einstellbare Vorrichtung (112;) mit einer Verteilervorrichtung (72) verbunden ist und diese derart reguliert, dass die pro Flächeneinheit auszubringende Menge der Gülle (G) einstellbar ist,
**dadurch gekennzeichnet,**
- **dass** zum Umfüllen der Gülle (G) aus dem Vorratsbehälter (62) in das Gülle-Tankfahrzeug (12) ein Umfüll-Leitungssystems (52) vorhanden ist
- und **dass** der Sensor (82) im Umfüll-Leitungssystem (52) angeordnet ist.

3. Vorrichtung nach Anspruch 1, **dadurch gekennzeichnet, dass** zur Entnahme der Gülle (G) eine Pumpe (4) im Vorratsbehälter (6) angeordnet ist.

4. Vorrichtung nach Anspruch 1, **dadurch gekennzeichnet, dass** zur Entnahme der Gülle (G) aus dem Vorratsbehälter (63) ein mit Vakuum beaufschlagtes Gülle-Tankfahrzeug (13) vorgesehen ist.

5. Vorrichtung nach Anspruch 2, **dadurch gekennzeichnet, dass** zum Umfüllen der Gülle (G) in das Gülle-Tankfahrzeug (12) eine mobile Pumpe (42) vorhanden ist.

6. Vorrichtung nach Anspruch 5, **dadurch gekennzeichnet, dass** zum Umfüllen der Gülle (G) in das Gülle-Tankfahrzeug (12) eine fahrbare Pumpstation (42) vorhanden ist.

7. Vorrichtung nach einem der vorstehenden Ansprüche, **dadurch gekennzeichnet, dass** die vom Sensor (8; 82; 83) analytisch gewonnen Inhaltsstoff-Ist-Daten über eine Verbindung (9; 92; 93) in Form einer Verbindungsleitung oder drahtlos an die Auswertevorrichtung (10; 102; 103) übertragbar sind.

8. Vorrichtung nach einem der vorstehenden Ansprüche, **dadurch gekennzeichnet, dass** die von der Auswertevorrichtung (10; 102; 103) ermittelten Steuerdaten über eine Verbindung (9; 92; 93) in Form einer Verbindungsleitung oder drahtlos an die einstellbare Vorrichtung (11; 112; 113) respektive die Verteilervorrichtung (7; 72; 73) übertragbar sind.

9. Vorrichtung nach Anspruch 7 oder 8, **dadurch gekennzeichnet, dass** die Verbindungsleitung eine elektrische oder optische Datenleitung (9; 93) ist.

10. Vorrichtung nach Anspruch 7 oder 8, **dadurch gekennzeichnet, dass** die drahtlose Verbindung (92) per Funk-telefon, Datenfunk, Infrarot, so genanntem Bluetooth oder ähnlichem realisierbar ist.

## Claims

1. Device for optimizing the dispensing quantity of content substances contained in liquid manure (G) which is extracted from a storage container (6; 63), onto ground which is to be fertilized, using a liquid manure tanker (1; 13),
- wherein there is a sensor (8; 83) for analysing the quantity of liquid manure (G) to be dispensed with respect to its content substances,
- wherein there is an evaluation device (10; 103) for comparing the content substance actual data acquired analytically by the sensor (8; 83) with predefined content substance data,
- wherein there is a connection (9; 93) between the evaluation device (10; 103) and an adjustable device (11; 113) with which the quantity of liquid manure (G) to be dispensed can be changed,
- wherein the adjustable device (11; 113) receives comparison data of the content substance data from the evaluation device (10; 103) via the connection (9; 93),
- and wherein the adjustable device (11; 113) is connected to a distributor device (7; 73) and regulates it in such a way that the quantity of liquid manure (G) to be dispensed per unit surface area can be adjusted,
**characterized**
- **in that** in order to extract the liquid manure (G) from the storage container (6; 63) for the liquid manure tanker (1; 13) a removal line system (5; 53) is present,
- and **in that** the sensor (8; 83) is arranged in the removal line system (5; 53).

2. Device for optimizing the dispensing quantity of content substances contained in liquid manure (G) which is extracted from a storage container (62), onto the ground to be fertilized, using a liquid manure tanker (12),
- wherein a sensor (82) for analysing the liquid manure (G) to be dispensed with respect to its content substances is present,
- wherein an evaluation device (102) for comparing the content substance actual data acquired analytically by the sensor (82) with predefined content substance data is present,
- wherein there is a connection (92) between the evaluation device (102) and an adjustable device (112) with which the quantity of liquid manure (G) to be dispensed can be changed,
- wherein the adjustable device (112) receives comparison data of the content substance data from the evaluation device (102) via the connection (92),
- and wherein the adjustable device (112) is connected to a distributor device (72) and regulates the latter in such a way that the quantity of liquid manure (G) to be dispensed per unit surface area can be adjusted,
**characterized**
- **in that** in order to transfer the liquid manure (G) from the storage container (62) into the liquid manure tanker (12) there is a transfer line system (52),
- and **in that** the sensor (82) is arranged in the transfer line system (52).

3. Device according to Claim 1, **characterized in that** in order to extract the liquid manure (G) a pump (4) is arranged in the storage container (6).

4. Device according to Claim 1, **characterized in that** in order to extract the liquid manure (G) from the storage container (63) a liquid manure tanker (13) to which a vacuum is applied is provided.

5. Device according to Claim 2, **characterized in that** in order to transfer the liquid manure (G) into the liquid manure tanker (12) there is a mobile pump (42).

6. Device according to Claim 5, **characterized in that** in order to transfer the liquid manure (G) into the liquid manure tanker (12) there is a mobile pumping station (42).

7. Device according to one of the preceding claims, **characterized in that** the content substance actual data acquired analytically by the sensor (8; 82; 83) can be transmitted via a connection (9; 92; 93) in the form of a connecting line or in a wireless fashion to the evaluation device (10; 102; 103).

8. Device according to one of the preceding claims, **characterized in that** the control data determined by the evaluation device (10; 102; 103) can be transmitted via a connection (9; 92; 93) in the form of a connecting line or in a wireless fashion to the adjustable device (11; 112; 113) or to the distributor device (7; 72; 73).

9. Device according to Claim 7 or 8, **characterized in that** the connecting line is an electrical or optical data line (9; 93).

10. Device according to Claim 7 or 8, **characterized in that** the wireless connection (92) can be implemented by radiotelephone, data radio, infrared, what is referred to as Bluetooth or the like.

## Revendications

1. Dispositif pour optimiser la quantité épandue d'ingrédients contenus dans un lisier (G) qui est soutiré d'un réservoir (6 ; 63) sur des sols à fertiliser à l'aide d'un véhicule à réservoir de lisier (1 ; 13),
- un capteur (8 ; 83) étant présent pour analyser le lisier (G) à épandre pour ce qui concerne ses ingrédients,
- un dispositif d'interprétation (10 ; 103) étant présent pour comparer les données réelles d'ingrédients obtenues de manière analytique par le capteur (8 ; 83) avec des données d'ingrédients prédéfinies,
- une liaison (9 ; 93) étant établie entre le dispositif d'interprétation (10 ; 103) et un dispositif réglable (11 ; 113) qui permet de modifier la quantité à épandre de lisier (G),
- le dispositif réglable (11 ; 113) recevant par le biais de la liaison (9 ; 93) des données comparatives des données d'ingrédients de la part du dispositif d'interprétation (10 ; 103),
- et le dispositif réglable (11 ; 113) étant relié à un dispositif de distribution (7 ; 73) et régulant celui-ci de telle sorte que la quantité de lisier (G) à épandre par unité de surface est réglable,
**caractérisé en ce**
- **qu'**il existe pour le véhicule à réservoir de lisier (1 ; 13) un système de conduites de soutirage (5 ; 53) pour le soutirage du lisier (G) du réservoir (6 ; 63),
- et **que** le capteur (8 ; 83) est disposé dans le système de conduites de soutirage (5 ; 53).

2. Dispositif pour optimiser la quantité épandue d'ingrédients contenus dans un lisier (G) qui est soutiré d'un réservoir (62) sur des sols à fertiliser à l'aide d'un véhicule à réservoir de lisier (12),
- un capteur (82) étant présent pour analyser le lisier (G) à épandre pour ce qui concerne ses ingrédients,
- un dispositif d'interprétation (102) étant présent pour comparer les données réelles d'ingrédients obtenues de manière analytique par le capteur (82) avec des données d'ingrédients prédéfinies,
- une liaison (92) étant établie entre le dispositif d'interprétation (102) et un dispositif réglable (112) qui permet de modifier la quantité à épandre de lisier (G),
- le dispositif réglable (112) recevant par le biais de la liaison (92 ;) des données comparatives des données d'ingrédients de la part du dispositif d'interprétation (102),
- et le dispositif réglable (112 ;) étant relié à un dispositif de distribution (72) et régulant celui-ci de telle sorte que la quantité de lisier (G) à épandre par unité de surface est réglable,
**caractérisé en ce**
- **qu'**il existe un système de conduites de transvasement (52) pour le transvasement du lisier (G) du réservoir (62) dans le véhicule à réservoir de lisier (12),
- et **que** le capteur (82) est disposé dans le système de conduites de transvasement (52).

3. Dispositif selon la revendication 1, **caractérisé en ce qu'**une pompe (4) est disposée dans le réservoir (6) pour le soutirage du lisier (G).

4. Dispositif selon la revendication 1, **caractérisé en ce qu'**il existe un véhicule à réservoir de lisier (13) mis sous vide pour le soutirage du lisier (G) hors du réservoir (63).

5. Dispositif selon la revendication 2, **caractérisé en ce qu'**il existe une pompe mobile (42) pour le transvasement du lisier (G) dans le véhicule à réservoir de lisier (12).

6. Dispositif selon la revendication 5, **caractérisé en ce qu'**il existe une station de pompage mobile (42) pour le transvasement du lisier (G) dans le véhicule à réservoir de lisier (12).

7. Dispositif selon l'une des revendications précédentes, **caractérisé en ce que** les données réelles d'ingrédients obtenues de manière analytique par le capteur (8 ; 82 ; 83) peuvent être transmises au dispositif d'interprétation (10 ; 102 ; 103) par le biais d'une liaison (9 ; 92 ; 93) sous la forme d'une ligne de liaison ou sans fil.

8. Dispositif selon l'une des revendications précédentes, **caractérisé en ce que** les données de commande déterminées par le dispositif d'interprétation (10 ; 102 ; 103) peuvent être transmises au dispositif réglable (11 ; 112 ; 113) ou au dispositif de distribution (7 ; 72 ; 73) par le biais d'une liaison (9 ; 92 ; 93) sous la forme d'une ligne de liaison ou sans fil.

9. Dispositif selon la revendication 7 ou 8, **caractérisé en ce que** la ligne de liaison est une ligne de données électrique ou optique (9 ; 93).

10. Dispositif selon la revendication 7 ou 8, **caractérisé en ce que** la liaison sans fil (92) est réalisable par radiotéléphone, par radiodiffusion de données, par infrarouge, par liaison dite Bluetooth ou similaire.
